# EUROPEAN PATENT APPLICATION

(11) **EP 1 065 894 A1**
(43) Date of publication of application: **03.01.2001**
(21) Application number: 99305103.6
(22) Date of filing: 29.06.1999
(51) Int. Cl.: H04Q 3/00

(54) **Event notification in a network management system**

(71) Applicant: LUCENT TECHNOLOGIES INC., Murray Hill, New Jersey 07974-0636 (US)
(72) Inventor: Belcher, Adrian Stephen, Malmesbury, Wiltshire SN15 9RA (GB); McConnell, Patricia Dorothy, Malmesbury, Wiltshire SN16 9LA (GB); Startup, Roy, Malmesbury, Wiltshire SN16 0LH (GB)
(74) Representative: Watts, Christopher Malcolm Kelway, Dr.

(57) **Abstract**

A method of notifying a user at a terminal connected to a network element manager of a telecommunications network of events requiring user attention is disclosed. A permanently visible panel is maintained on the visual display screen. This panel has a first state (31) in which it has a neutral colour, a second state (32) in which it is red and flashing and a third state (33) in which it is red and steady. The first state is the initial state. When a notification is received of an event requiring user attention, information identifying the location at which the event occurred and the type of the event is appended to a list of pending events and the panel is placed into the second state, thus indicating a new event notification. The user can acknowledge the notification by making a mouse click in the panel, whereupon the panel is placed into the third state. The user can make a request by double-clicking within the panel and in response to that request the appropriate application to take action in respect of an event on the list of pending events is opened, either directly, or after presenting the user with a type menu, if there are several types of event on the list, and an event list, if there are several events on the list of the selected, or only, type. In response to the completion of action in respect of an event on the list of pending events, that event is removed from the list. When the list becomes empty the panel reverts to the first state. The user is thus instantly notified of events requiring attention and, if it is not possible to deal with an event immediately, there is a persistent reminder and a simple way of opening the relevant application.

## Description

### Technical Field

This invention relates to methods and apparatus for notifying users of events requiring user attention in telecommunications systems, such as Synchronous Digital Hierarchy (SDH) or Synchronous Optical Network (SONET) systems.

### Background of the Invention

Telecommunications networks such as SDH or SONET comprise network elements interconnected by transmission media, such as optical fibre. These network elements include the necessary functionality to route the traffic of the network between subscribers. The network elements are supervised by element controllers, which monitor their performance and contain information about the network elements as items of equipment. Typically there may be up to two hundred network elements monitored by each network element manager.

When an event occurs at a network element which is outside the normal routine of receiving and redirecting messages through the network, a message is sent to the network element manager. Some of these messages are merely informative, so that the information kept on the network element manager can be kept up to date, and some relate to the functioning of the network as a whole, as opposed to the functioning of the individual network elements as such, and need to be passed on to a higher level of control. However, there are some events which require the reasonably prompt attention of a human being (a "user") who is at a terminal connected to the network element manager. These are not necessarily things that have gone wrong, although they may be. For example, if someone logs on to a network element, via a local terminal, this may be an intruder or it may be someone who has a legitimate need to log on in order to make some adjustment or to correct some fault which cannot be done at a distance via the network element manager. The user needs to be aware of such events to decide whether action needs to be taken, such as terminating the log-in, or whether it is legitimate and can be allowed to continue. This is not the kind of decision that can be taken automatically by the network element manager.

There are several ways the user can currently be notified of such events. In some cases they are presented as alarms. In some cases, a pop-up warning appears to notify the user that some event has occurred, which the system cannot resolve without the user intervening to make a decision. In the second case, if the user does not action the notification immediately, but pops the warning message down, that information is lost and the user may not be aware that there is still a problem to be addressed. Also, finding the correct screen to action the request at a later time via the normal menus can be quite difficult, since it is necessary to find the correct application to deal with the event and the network element that notified the event.

### Summary of the Invention

According to the invention there is provided a method as set out in claim 1, preferred forms of the invention being set out in the dependent claims.

A permanently visible panel of the display screen on the user's terminal has three visually distinguishable states. By "permanently visible" is meant that the panel cannot be popped down and preferably that it is visible in all normal use of the screen. These states comprise an initial state, indicating that there are no pending events requiring user attention, a second state, in which the panel may be red and flashing, indicating that there is at least one unacknowledged event requiring user attention, and a third state, in which the panel may be red and steady, indicating that there is at least one event requiring user attention which has not been actioned, though none that have not been acknowledged. An acknowledgement of an event may be given by the user making a mouse-click within the panel or in a portion of it, such as an icon, or by opening any screen from the panel.

To action an event, the user makes a request, for example by double-clicking within the panel or a portion of it, which results in the appropriate application to action a pending event being opened, either directly or, if there is more than one pending event or more than one type of pending event, via one or more menus or lists.

### Brief Description of the Drawing

Some embodiments of the invention will now be described by way of example with reference to the accompanying drawings in which:
Fig. 1 shows, in diagrammatic form, part of a telecommunications network in which the invention may be practised;
Fig. 2 is a schematic view of a user's main display screen as employed in an embodiment of the invention, showing the user attention panel;
Fig. 3 is a state diagram showing the states of the panel, the transitions between them and the actions associated with those transitions in an embodiment of the invention;
Fig. 4 is a logic flow diagram showing the action taken in response to a user request in an embodiment of the invention;
Fig. 5 is a detail of a logic flow diagram in an alternative embodiment of the invention; and
Fig. 6 shows a type menu as employed in the embodiment of Fig 5.

### Detailed Description

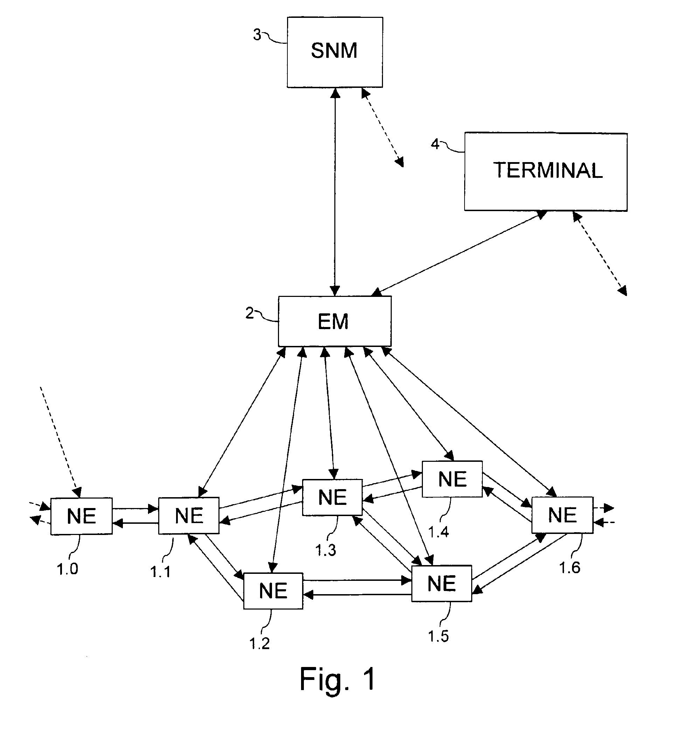

As shown in Fig. 1 a telecommunications network includes network elements (NE) 1.0-1.6, which perform the subscriber traffic carrying functions of the network and contain the functionality to do so, including re-routing messages where necessary. These network elements are supervised by an element manager (EM) 2, which contains information concerning the network elements as individual items of equipment and monitors their operation. Each element manager typically monitors up to about 200 network elements. Supervision of the network, or a part of the network, as a network, as opposed to supervision of the network elements as individual elements, is carried out by a sub-network manager (SNM) 3 which is connected to one or more, typically up to ten, element managers 2. Human input to the operation of the supervision of the network elements is via one or more terminals 4 connected to the element manager. Such a terminal may also be connected to more than one element manager.

Network elements 1.1-1.6 that are under the supervision of a single sub-network manager 3 form a network domain. Some of the network elements 1.1 of one network domain are connected to network elements 1.0 of different domains so that the domains are connected to form the whole network and traffic can pass right across the network.

In operation, the network elements generate alarms from time to time which are sent to their network element manager 2 and, if they relate to the network as a network, as opposed to the network elements as individual elements, are sent on to the sub-network manager 3. Such alarms indicate events such as loss of signal on a link.

Sometimes events occur which may, but do not necessarily, generate alarms and may, but do not necessarily, indicate that something has gone wrong, but which require prompt user attention. For example, network elements normally function without human intervention, but they have interfaces through which a technician can log on to them directly, via what is known as a craft interface terminal (CIT). This may be necessary, for example, to change some setting or investigate some fault which cannot conveniently be done remotely via the element manager 2. Because of the possibility of unauthorised access, the user needs to be made aware of any such access and to confirm or terminate the log-in. Other types of event requiring user attention may include actions requiring user confirmation, abnormal conditions, security violations etc.

Events requiring user attention are reported to the element manager 2 by the network element at which they occur, if they occur in a network element. Some such events, such as security violations, may occur in the element manager itself. Information about these events is preferably sent immediately to the terminal 4, though as an alternative it would be possible, though not preferred, for the terminal 4 to poll the element manager 2 for such events. The notification message sent to the terminal includes information specifying the location of the event (i.e. which network element or which element manager) and the type of the event.

The normal way for the user to have been informed of such an event in the prior art would have been with a pop-up screen. This is convenient, since the user can open the appropriate application directly from the pop-up screen. The trouble is that if, for some reason, the user cannot deal with the event immediately, for example because he is occupied with some task that cannot be interrupted, or because he needs further information, the pop-up screen may be popped down again. There is then no reminder of the pending event and, even if the user remembers to deal with it, he will have to find the appropriate application, which may not be straightforward.

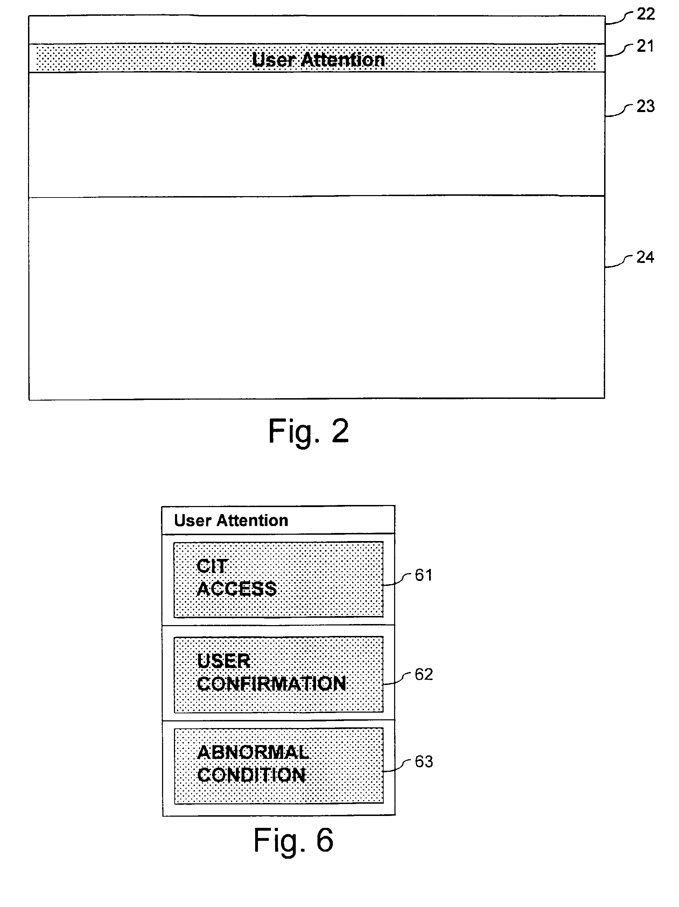

The main display screen employed in an embodiment of our invention is shown in Fig. 2. A permanently visible user attention panel 21 is positioned immediately below a conventional menu bar 22. Below the user attention panel 21 is an alarm list area 23 and a map area 24.

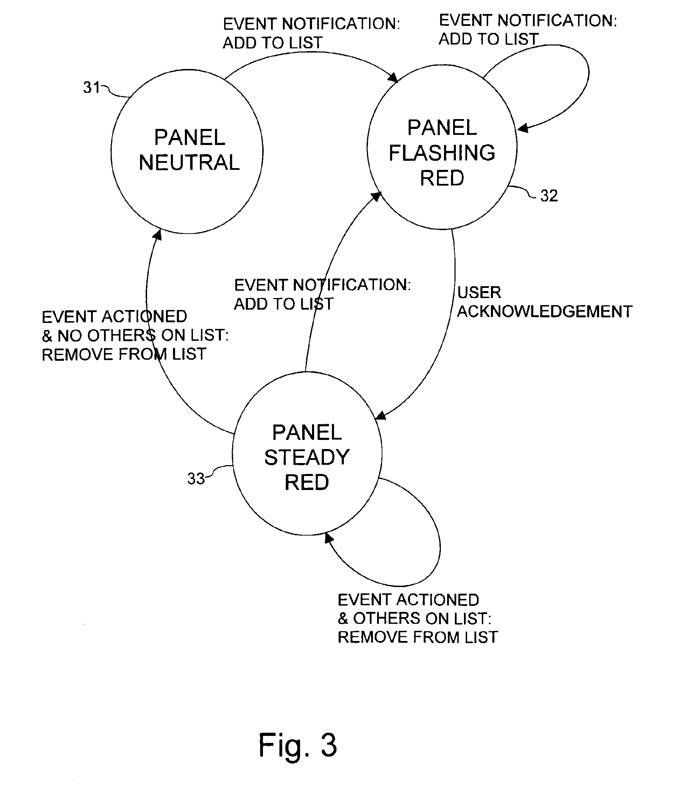

The states of the user attention panel 21 and the transitions between them are shown in the state diagram shown in Fig. 3. Initially, the panel is in a first state 31 in which it has a neutral colour. The other states are a second state 32 in which the panel is flashing and coloured red and a third state in which it is still coloured red, but is steady. Of course, other attributes than colour and flashing could be used to distinguish the states, as long as they are easily visually distinguishable. The purpose of the first state is to gain the attention of the user quickly, and the purpose of the second state is to act as a constant reminder. We chose red colour and flashing attribute with that in mind, but other attributes may also be effective. When the terminal receives a notification of an event requiring user attention, the information about the event is added to a list of pending events and the panel enters the second state 32, whichever state it was previously in.

There may also be provision for a script to be executed whenever a notification is received. This may carry out any action that can be carried out by a script, such as paging someone, or sending out a fax message. The advantage of using a script is that it is a simple matter for a user or system administrator to customise.

The user, on becoming aware of the newly reported event, can acknowledge the notification by clicking with a mouse on the panel or by opening any screen from the panel. Once the notification is acknowledged, the panel enters the third state 33. When the necessary action has been taken in respect of an event it is removed from the list. If there are any other events on the list, the panel remains in the third state 33, to remind the user that there are still some pending events. If, on the other hand, there are no other events on the list, the panel reverts to the first state 31.

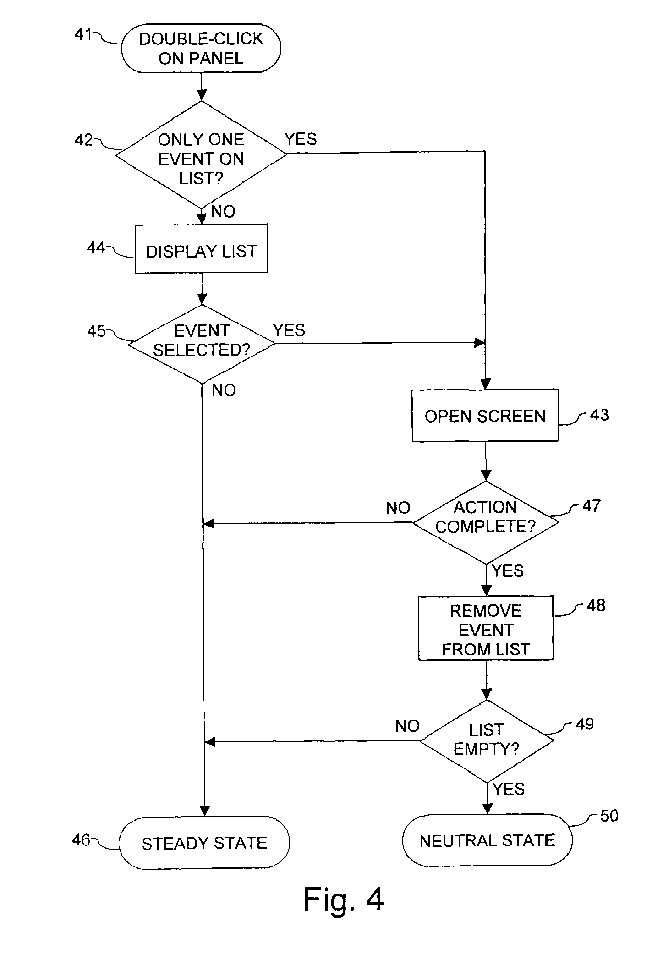

Fig. 4 shows the process which occurs in an embodiment of the invention when the user makes a request when the panel is in the second or third state. The user makes the request by double-clicking with a mouse on the panel (box 41). The list is then examined to see if there is only one event on the list (decision box 42). If there is only one event (the "YES" exit), the appropriate screen is opened (box 43) using the information contained in the notification to identify the appropriate application to deal with the event. On the other hand, if there are one or more other events on the list (the "NO" exit), the list is displayed (box 44) so that the user can select an event to deal with. If and when the user does select an event (the "YES" exit of decision box 45), the appropriate screen is opened (43). If the list is closed without selecting an event (the "NO" exit of decision box 45) the panel reverts (box 46) to the third (steady) state 33 of Fig. 3. If the application screen is closed without the necessary action having been completed (the "NO" exit of decision box 47) the screen also reverts (46) to the steady state. However, if the necessary action has been completed (the "YES" exit of decision box 47) the event is removed from the list (box 48) and the list is examined (decision box 49) to see if it is empty. If it is empty (the "YES" exit) the panel reverts (box 50) to the neutral state 31 of Fig. 3, but if it is not (the "NO" exit) it reverts (box 46) to the steady state. As an alternative, the action on closing an application screen without having completed the necessary action (the "NO" exit from decision box 47) or of completing an action when there are more events on the list (the "NO" exit from decision box 49) could be to return to display the list once more (box 44). Closing the list without selecting an event (the "NO" exit from decision box 45) would still result in a return to the steady state.

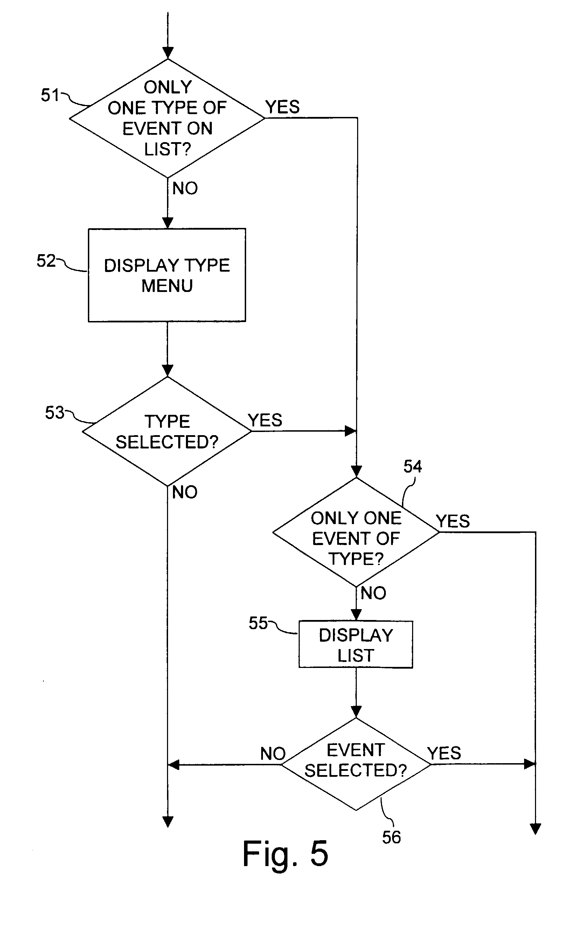

Fig. 5 shows another variation on the process shown in Fig. 4. The section shown replaces boxes 42, 44 and 45 of Fig. 4. In this variation, the events are organised into types. When the request is made (box 41 of Fig. 4) the list is examined to see if there is only one type of event on the list (decision box 51). If the answer is "NO", i.e. there are several types of event present, a type menu is displayed. An example of such a type menu is shown in Fig. 6, which shows a CIT access panel, a user confirmation panel and an abnormal condition panel. The user selects a type by clicking with a mouse on the respective panel. Panels corresponding to types of event of which none are present on the list can be greyed out or simply not shown. If the user closes the menu without selecting a type (the "NO" exit from decision box 53) the panel reverts to the steady state (box 46 of Fig. 4), but if a type is selected (the "YES" exit), or if there had been only one type of event present (the "YES" exit of decision box 51), the list is examined to see if there is only one event of that type (decision box 54). If there is more than one (the "NO" exit) the list is displayed, but only showing events of the relevant type. This has the advantages that the format of the list can be tailored to each type of event, and that the display contains fewer items. If an event is selected from the list (the "YES" exit from decision box 56), or if there was only one event of that type (the "YES" exit from decision box 54) the relevant application is opened (box 43 of Fig. 4), and if not (the "NO" exit from decision box 56) the panel reverts to the steady state (box 46 of Fig. 4).

The method may be implemented by a computer program product comprising software code portions for performing the steps of the disclosed method when the product is run on the terminal 4.

## Claims

1. A method of notifying a user at a terminal (4) connected to a network element manager (2) of a telecommunications network of events requiring user attention, said terminal having a visual display screen, the method comprising:
maintaining a permanently visible panel (21) of the visual display screen, said permanently visible panel having a first state (31), a second state (32) and a third state (33), said states being visually distinguishable, the first state being the initial state;
receiving a notification of an event requiring user attention, said notification containing information identifying the location at which the event occurred and the type of the event;
in response to said notification, adding said information to a list of pending events and placing the panel into the second state;
in response to an acknowledgement from the user when the panel is in the second state, placing the panel into the third state;
in response to a request (41) from the user, opening the appropriate application (43) to take action in respect of an event on the list of pending events;
in response to the completion of action in respect of an event on the list of pending events, removing said event from said list (48); and
in response to the list of pending events becoming empty, placing the panel into the first state (50).

2. A method as claimed in claim 1 including, in response to said notification, activating a script.

3. A method as claimed in claim 1 or claim 2 wherein there are a plurality of pending events on the list when the request is made and in response to the request a list of events is displayed (44), the application being opened in response to the user selecting an event from the displayed list.

4. A method as claimed in claim 1 or claim 2 wherein there are a plurality of types of pending event on the list when the request is made and in response to the request a type menu is displayed (52), the application being opened in response to the user selecting a type from the menu.

5. A method as claimed in claim 4 wherein there are a plurality of events of the selected type on the list and in response to the selection of the type a list of events of that type is displayed (55), the application being opened in response to the user selecting an event from the displayed list.

6. Apparatus for notifying a user of events requiring user attention in a telecommunications network, comprising a terminal (4) connected to a network element manager (2) of said telecommunications network, said terminal having a visual display screen and comprising means arranged to carry out each step of a method as claimed in any of the preceding claims.
